Europäisches Patentamt

European Patent Office

Office européen des brevets

(19)

(11) Veröffentlichungsnummer: **0 215 287 B1**

(12)

# EUROPÄISCHE PATENTSCHRIFT

(45) Veröffentlichungstag der Patentschrift:
07.06.89

(21) Anmeldenummer: 86111084.9

(22) Anmeldetag: 11.08.86

(51) Int. Cl.⁴: **G01N 21/37**

(54) Nichtdispersives Infrarot-Gasanalysegerät nach dem Zweistrahl-Prinzip.

(30) Priorität: 16.08.85 DE 3529482

(43) Veröffentlichungstag der Anmeldung:
25.03.87 Patentblatt 87/13

(45) Bekanntmachung des Hinweises auf die Patenterteilung:
07.06.89 Patentblatt 89/23

(84) Benannte Vertragsstaaten:
DE FR GB NL

(56) Entgegenhaltungen:
EP-A- 0 022 246
DE-A- 2 702 978
DE-A- 2 936 473
US-A- 3 770 974

(73) Patentinhaber: Siemens Aktiengesellschaft Berlin und München, Wittelsbacherplatz 2, D-8000 München 2(DE)

(72) Erfinder: Weinel, Johann, Strassburgerstrasse 13, D-7500 Karlsruhe 21(DE)

## Beschreibung

Die Erfindung bezieht sich auf ein NDIR-Gasanalysegerät, mit einem Meß- und einem Vergleichsstrahlengang und den weiteren, in den Oberbegriffen der Ansprüche 1 oder 2 angegebenen bekannten Merkmalen, siehe z.B. US-A 3 770 974 beziehungsweise EP-A 10 022 246.

Im meßtechnischen Nullpunkt, also ohne eine IRabsorbierende Gaskomponente im Meßstrahlengang, entstehen bei der zyklischen Unterbrechung der Strahlengänge in beiden Empfängerkammern gleich große Druckimpulse, die sich gegenseitig aufheben. Am Meßsignalausgang tritt kein Signal auf. Erst ein im Meßstrahlengang vorhandenes, die Strahlungsintensität im zugeordneten Empfänger schwächendes, IR-absorbierendes Gas führt zu einer Druckdifferenz und damit zu einer meßbaren Wechselgröße.

Zur Überprüfung der vollen Funktionsfähigkeit des auf Null abgeglichenen Meßgeräts sowie zur Ausschaltung von durch Strahleralterung oder Fensterverschmutzung auftretenden Langzeitdriften des Nullpunkts ist eine Möglichkeit zur Anzeige und zum Eingriff wünschenswert.

Diese Anzeige- und Eingriffsmöglichkeit wird dadurch geschaffen, daß in einer die Empfängerkammern im Meß- und Vergleichsstrahlengang verbindenden Leitung ein Druck- oder Strömungsfühler zur Erzeugung eines der Gesamtintensität der detektierten IR-Strahlung proportionalen Signals angeordnet ist.

Mit diesem so gewonnenen Signal läßt sich auch bei Null-Kompensation des Meßgeräts, wenn also kein Signal am Meßsignalausgang anliegt, die Funktionsfähigkeit des Meßgeräts überprüfen.

Das Signal läßt sich auch als Steuersignal für eine phasengesteuerte Gleichrichtung des Meßsignals verwenden, indem es verstärkt und in eine Rechteckspannung umgewandelt wird. Ein besonderer Abgriff an dem umlaufenden Strahlunterbrecher zur Gewinnung eines Steuersignals, wie bei den bisherigen Geräten, kann entfallen.

Weiter kann das Signal als Eingangsgröße eines Regelkreises zur Regelung des Infrarot-Strahlers eingesetzt werden. Auch bei sehr hohen Konzentrationen der Meßgaskomponente im Meßstrahlengang kann sich dieses Signal höchstens halbieren, weil die Hälfte seines Anteils aus dem Vergleichsstrahlengang herrührt.

Die Strahlungsleistung wird so geregelt, daß dieses Signal stets konstant bleibt, d. h., bei Null-Kompensation hat das System immer eine konstante Empfindlichkeit, da über die Regelung der Einfluß der Strahleralterung und Schmutzablagerungen im optischen Strahlengang kompensiert wird. Damit läßt sich vorteilhaft die sonst notwendige Kalibrierung mit Eichgas in bestimmten Zeitabständen vermeiden.

Die aus dem Signal gesteuerte Regelung des Strahlers wirkt sich auch linearisierend auf Meßsignal am Meßsignalausgang aus, da mit steigender Meßgaskonzentration und damit größer werdendem Meßsignal die Strahlerintensität angehoben wird.

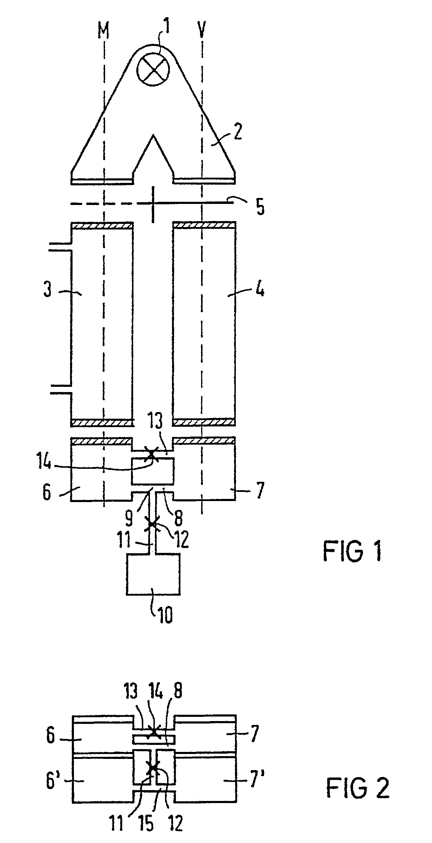

Zur Erläuterung der Erfindung sind in den Figuren 1 und 2 Ausführungsbeispiele schematisiert dargestellt und im folgenden beschrieben.

Figur 1 zeigt ein NDIR-Gasanalysegerät nach dem Zweistrahl-Prinzip.

Die von einer Infrarot-Strahlungsquelle 1 ausgehende Strahlungsenergie wird mit Hilfe eines Strahlteilers 2 in zwei parallele Strahlengänge aufgespalten, wobei im Meßstrahlengang M die mit dem die zu analysierende Komponente enthaltenden Gasgemisch, kurz Meßgas genannt, durchströmte Meßküvette 3 und im Vergleichsstrahlengang V die mit einem nicht absorbierenden Gas gefüllte Vergleichsküvette 4 liegt.

Von einem nach dem Strahlteiler 2 angeordneten umlaufenden Blendenrad 5 werden die Strahlengänge gegenläufig zyklisch unterbrochen, d. h., während im Meßstrahlengang M die Strahlintensität zunimmt oder konstant ist, nimmt sie im Vergleichsstrahlengang V gleichermaßen ab bzw. wird zu Null und umgekehrt.

Auf die Meß- bzw. Vergleichsküvette 3, 4 folgend sind in den Strahlengängen M, V pneumatische Empfängerkammern 6 und 7 angeordnet, die in der Regel mit einem der zu analysierenden Gaskomponente entsprechenden Gas gefüllt sind. Die Empfängerkammern 6 und 7 stehen über eine erste Leitung 8 miteinander in Verbindung, diese Leitung 8 ist mittig angezapft, von diesem T-Abzweig 9 geht eine zu einem Ausgleichsvolumen 10 führende Leitung 11 ab, in welcher ein auf Druck- oder Strömung ansprechender Meßfühler 12 als Signalwandler angeordnet ist, der die bei der Druckdifferenzbildung zwischen den pneumatischen Empfängerkammern auftretende, dem Anteil des gesuchten Gases in dem Meßgas entsprechenden Druckimpulse in ein elektrisches Signal, das Meßsignal, umwandelt.

Erfindungsgemäß ist parallel zur ersten Leitung 8 eine zweite Leitung 13 zwischen den Empfängerkammern 6 und 7 geschaltet, welche einen weiteren, also den zweiten Druck- oder Strömungsfühler 14 enthält.

Im Nullpunkt heben sich die gegeneinandergeschalteten Drücke in der Leitung 8 auf, so daß in dem Meßfühler 12 kein Meßsignal entsteht. In der zweiten Leitung 13 tritt jedoch dann der größte Gasdurchfluß auf, der von dem zweiten Fühler 14 detektiert und in ein elektrisches Signal umgewandelt wird. Dabei wird der Nullabgleich in dem Meßsystem mit dem Meßfühler 12 nicht beeinflußt.

Es ist bekannt, anstelle der einfachen pneumatischen Empfängerkammern 6 und 7 nach Beispiel in Figur 1 sogenannte Doppelschichtempfängerkammern zu verwenden, wie sie in Figur 2 dargestellt sind. Dazu werden dem ersten Kammerpaar 6 und 7 ein zweites Kammerpaar 6', 7' nachgeschaltet, die jeweils vom Meß- bzw. Vergleichsstrahl beaufschlagt werden. Der Meßfühler 12 ist hier wie bei Figur 1 in einer Leitung 11 angeordnet, die von der Leitung 8 zwischen den ersten Kammern 6 und 7 ausgeht und in eine Leitung 15 zwischen den zweiten Kammern 6', 7' mündet. Die den zweiten Fühler 14 enthaltende Leitung 13 ist entweder - wie gezeichnet - parallel zur Leitung 8 zwischen den ersten Kammern 6 und 7 angeordnet. Sie kann jedoch auch die zweiten Kammern 6' und 7' verbinden.

## Patentansprüche

1. Nichtdispersives Infrarot-Gasanalysegerät nach dem Zweistrahl-Prinzip, mit einem Meß- und einem Vergleichsstrahlengang, Mitteln zur gegenläufigen zyklischen Unterbrechung der Strahlengänge, je einer pneumatischen Empfängerkammer (6, 7) in jedem Strahlengang, einer die Empfängerkammern verbindenden ersten Leitung mit einem zu einem Ausgleichsvolumen (10) führenden T-Abzweig, einem in dem T-Abzweig angeordneten Druck- oder Strömungsfühler (12) zur Erzeugung eines auf Differenzbildung beruhenden elektrischen Meßsignals, **dadurch gekennzeichnet**, daß in einer parallel zur ersten Leitung (8) geschalteten zweiten Leitung (13) ein zweiter Druck- oder Strömungsfühler (14) zur Erzeugung eines zweiten, der Gesamtintensität der detektierten IR-Strahlung proportionalen Signals angeordnet ist.

2. Nichtdispersives Infrarot-Gasanalysegerät nach dem Zweistrahl-Prinzip mit einem Meß- und einem Vergleichsstrahlengang, Mitteln zur gegenläufigen zyklischen Unterbrechung der Strahlengänge, je einem pneumatischen Empfänger nach dem Zweischichtprinzip in jedem Strahlengang, bestehend aus je zwei hintereinanderliegenden Empfängerkammern (6, 6', 7, 7'), wobei die vorderen und hinteren Kammern durch je eine Leitung (13, 15) verbunden sind, einem in einer Querverbindung der beiden Leitungen (13, 15) angeordneten Meßfühler (12) zur Erzeugung eines auf Differenzbildung beruhenden elektrischen Meßsignals **dadurch gekennzeichnet**, daß in einer weiteren Leitung (13) zwischen den vorderen Kammern (6 und 7) oder den hinteren Kammern (6', 7') der pneumatischen Empfänger ein zweiter Druck- oder Strömungsfühler (14) zur Erzeugung eines zweiten, der Gesamtintensität der detektierten IR-Strahlung proportionalen Signals angeordnet ist.

## Claims

1. Non-dispersive infrared gas analyzer according to the two-beam principle, having a measuring and a comparison beam path, means for opposed cyclic interruption of the beam paths, a pneumatic receiver chamber (6, 7) respectively in each beam path, a first duct, connecting the receiver chambers, having a T-branch leading to a compensating volume (10), a pressure or flow sensor (12) arranged in the T-branch for the generation of an electrical measuring signal based on difference formation, characterised in that a second pressure or flow sensor (14) for the generation of a second signal proportional to the total intensity of the detected infrared radiation is arranged in a second duct (13) connected in parallel to the first duct (8).

2. Non-dispersive infrared gas analyzer according to the two beam principle, having a measuring and a comparison beam path, means for opposed cyclic interruption of the beam paths, a pneumatic receiver according to the two layer principle respectively in each beam path, consisting of, in each case, two receiver chambers (6, 6', 7, 7') lying in series, the front and rear chambers being connected by respective ducts (13, 15), a measuring sensor (12), which is arranged in a cross connection of the two ducts (13, 15), for the generation of an electrical measuring signal based on difference formation, characterised in that a second pressure or flow sensor (14) for the generation of a second signal proportional to the total intensity of the detected infrared radiation is arranged in a further duct (13) between the front chambers (6 and 7) or the rear chambers (6', 7') of the pneumatic receivers.

## Revendications

1. Analyseur de gaz non dispersif à infrarouge, fonctionnant selon le principe à deux faisceaux, comportant un faisceau de mesure et un faisceau de comparaison, des moyens pour l'interruption cyclique alternative des faisceaux, une chambre de récepteur pneumatique (6, 7) dans chaque faisceau, une première conduite reliant les chambres de récepteurs à une dérivation en T menant à un volume de compensation (10), ainsi qu'un capteur de pression ou d'écoulement (12) disposé dans la dérivation en T et servant à générer un signal de mesure électrique basé sur la formation d'une différence, caractérisé en ce qu'un second capteur de pression ou d'écoulement (14), servant à générer un second signal proportionnel à l'intensité globale du rayonnement infrarouge détecté, est disposé dans une seconde conduite (13) branchée parallèlement à la première conduite (8).

2. Analyseur de gaz non dispersif à infrarouge, fonctionnant selon le principe à deux faisceaux, comportant un faisceau de mesure et un faisceau de comparaison, des moyens pour l'interruption cyclique alternative des faisceaux, un récepteur pneumatique fonctionnant selon le principe des deux couches dans chaque faisceau, chaque récepteur étant constitué de deux chambres de récepteur (6, 6', 7, 7') disposées l'une derrière l'autre, les chambres avant et les chambres arrière étant reliées chaque fois entre elles par une conduite (13, 15), ainsi qu'un capteur (12) disposé dans une liaison transversale de deux conduites (13, 15) et servant à générer un signal de mesure électrique basé sur la formation d'une différence, caractérisé en ce qu'un second capteur de pression ou d'écoulement (14), servant à générer un second signal proportionnel à l'intensité globale du rayonnement infrarouge détecté, est disposé dans une conduite supplémentaire (13) entre les chambres avant (6 et 7) et les chambres arrière (6' et 7') des récepteurs pneumatiques.

FIG 1

FIG 2